(19) **Europäisches Patentamt / European Patent Office / Office européen des brevets**

(11) **EP 4 154 275 B1**

(12) ## EUROPEAN PATENT SPECIFICATION

(45) Date of publication and mention
of the grant of the patent:
**02.07.2025  Bulletin 2025/27**

(21) Application number: **21727465.3**

(22) Date of filing: **19.05.2021**

(51) International Patent Classification (IPC):
*G21C 3/54* $^{(2006.01)}$   *G21C 3/04* $^{(2006.01)}$
*G21C 1/22* $^{(2006.01)}$

(52) Cooperative Patent Classification (CPC):
**G21C 3/041; G21C 1/22; G21C 3/54; G21C 17/022;**
**Y02E 30/30**

(86) International application number:
**PCT/EP2021/063373**

(87) International publication number:
**WO 2021/234045 (25.11.2021 Gazette 2021/47)**

(54) **CONTROL OF NOBLE GAS BUBBLE FORMATION IN A MOLTEN SALT REACTOR**

REGELUNG DER BILDUNG VON EDELGASBLASEN IN EINEM SALZSCHMELZEREAKTOR

RÉGULATION DE LA FORMATION DE BULLES DE GAZ NOBLES DANS UN RÉACTEUR À SEL
FONDU

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.05.2020  GB 202007517**
**13.07.2020  GB 202010754**

(43) Date of publication of application:
**29.03.2023  Bulletin 2023/13**

(73) Proprietor: **Scott, Ian Richard**
**Stratford on Avon, Warwickshire CV37 9TQ (GB)**

(72) Inventors:
• **GODFREY, Luke**
**Stratford-upon-Avon CV37 9NP (GB)**
• **SCOTT, Ian Richard**
**Stratford on Avon Warwickshire CV37 9TQ (GB)**

(74) Representative: **Marks & Clerk LLP**
**15 Fetter Lane**
**London EC4A 1BW (GB)**

(56) References cited:
**WO-A1-2015/038922   WO-A1-2016/059364**
**WO-A1-2017/192611   GB-A- 2 508 537**

EP 4 154 275 B1

**Description**

<u>Field of the Invention</u>

The present invention relates to fission reactors. In particular the present invention relates to reactor designs and methods of operation in order to control the formation of bubbles within the fuel salt of a molten salt reactor.

<u>Background</u>

Nuclear reactors using molten salts as fuel (MSR's) have been known since the 1960's when the US Molten Salt Reactor experiment was successfully run. Many designs for molten salt reactors have been conceived since that time. Such reactors fall into two classes.

In the first class, pumped MSR's, the molten salt fuel is actively pumped between a reaction chamber, where the fuel enters a critical state and generates fission heat, and a heat exchanger where the heat is transferred to another fluid, often another molten salt without fissile elements (a "coolant salt"), and used to generate power. A prior art reactor can be found in patent document WO2015/038922 A1.

In the second class, static molten salt reactors, the molten salt fuel sits within fuel tubes, often formed into fuel tube assemblies, and moves within the tubes only through natural convection, with the fuel remaining within the reactor core and not being pumped outside that core. A second fluid (e.g. a coolant salt) flows past the fuel tubes and removes heat from the core. The fuel salt remains in the core throughout its operational life and is refreshed by removing a spent fuel assembly and replacing it with a fresh one - essentially as is the case with fuel assemblies containing solid fuel elements. This second class of MSR is described in GB2508537 and equivalents. A further prior art reactor can be found in patent document WO2017/192611A1 A1.

Molten salt reactors inevitably produce noble gasses as fission products and those gasses have low solubility in the molten salt fuel. It is essential for the safety of the reactors that the movement of the noble gasses out of the active reactor core is highly predictable since one of those gasses is Xenon 135 which is the strongest neutron absorber known and therefore has major influence of the reactivity of the core.

In the first class of pumped molten salt reactors those gasses can be removed in a variety of ways including sparging the fuel salt with Helium.

The challenge of managing noble gasses in the second class of molten salt reactors is greater. The gasses can diffuse out of the molten salt fuel into the gas space above the fuel where they will have only small reactivity impacts since they are substantially outside the reactor core. However, it is also possible that they will form bubbles on the inner surface of the fuel tubes. Such bubbles could be triggered to detach from the tube by a physical shock or other effects with a large number of bubbles simultaneously rising up the fuel salt into the gas space and causing a major increase in core reactivity.

This would be an unacceptable safety vulnerability and there is therefore a need to ensure that bubble formation in the fuel tubes cannot occur.

<u>Summary</u>

According to a first aspect of the invention, there is provided a molten salt fission reactor. The reactor comprises a reactor core, which comprises a plurality of fuel tubes. Each fuel tube contains a fuel salt and a gas interface. The fuel salt is a molten salt of one or more fissile isotopes. The gas interface is a surface of the fuel salt in contact with a gas space during operation of the reactor. The reactor also comprises a fuel salt cooling system, which is configured to cool the fuel salt. The cooling system comprises a heat exchanger and a coolant tank. The coolant tank contains a coolant liquid in which the fuel tubes are at least partially immersed. The heat exchanger is for extracting heat from the coolant liquid. The fuel salt cooling system is configured such that during operation of the reactor, for all points within the fuel salt within each fuel tube except at the respective gas interface:

$$T_2 > \frac{1}{-\frac{R_{He}}{\Delta H_{He}} * ln\left(\frac{P_1}{P_2}\right) + \frac{1}{T_1}}$$

where:

$T_1$ is the temperature of the fuel salt at the gas interface;
$T_2$ is the temperature of the fuel salt at the measured point;
$P_1$ is the absolute pressure at the gas interface;

$P_2$ is the absolute pressure at the measured point;
$R_{He}$ is the gas constant of Helium;
$\Delta H_{He}$ is the enthalpy of solution of Helium in the fuel salt.

Accordingly, the solubility of Helium is lowest at the gas interface.

The fuel salt cooling system in configured such that during operation of the reactor the solubility of a noble gas (e.g. Helium as described above, or any other noble gas from Helium to Xenon) in the fuel salt close to the gas interface is lower than its solubility elsewhere in the fuel tube. This ensures that the noble gas does not reach a saturating concentration other than in this region close to the gas interface and bubbles of gas cannot therefore form.

The solubility of noble gas in the fuel salt is a function of:

- The nature of the fuel salt
- The nature of the gas (with Xenon being of particular importance due to its high neutron absorbance)
- The temperature of the fuel salt, with the solubility of noble gasses in molten salts rising as the salt temperature increases
- The pressure of the molten salt with solubility being approximately proportional to pressure

The latter two factors are most amenable to control.

If the temperature of the fuel salt at the top of the tube can be maintained at a lower level than the temperature lower down the fuel column then gas bubbles cannot form and gas will exit the fuel salt by diffusion across the gas interface. That low temperature can be achieved by one of more of the following mechanisms:

- suppressing nuclear fission in the top region of the fuel tube by use of neutron absorbers or reflectors
- ensuring that the temperature of the coolant is low enough in the top region of the fuel tube to maintain the low temperature in the fuel salt
- deflecting the natural convection flow of the fuel salt within the tube so that hot salt produced in the high power region of the fuel tube is prevented from rising to the region of salt close to the gas interface

However, the pressure effect is also highly relevant in such systems. Fuel salt is a dense liquid and the hydrostatic pressure of the liquid column means that, at constant temperature, the solubility of noble gasses increases at lower levels within the fuel salt column.

It is therefore possible to achieve the objective of having minimum gas solubility at the upper salt/gas interface even though fuel salt temperature is somewhat lower further down the salt column.

The balance of the temperature and pressure effects dictates the safe operational envelope for the nuclear reactor.

According to a second aspect of the invention, there is provided a method of operating a molten salt fission reactor according to the first aspect. The temperature of the fuel salt is maintained such that that during operation of the reactor, for all points within the fuel salt within each fuel tube except at the respective gas interface:

$$T_2 > \frac{1}{-\frac{R_{He}}{\Delta H_{He}}*ln\left(\frac{P_1}{P_2}\right)+\frac{1}{T_1}}$$

where:

$T_1$ is the temperature of the fuel salt at the gas interface;
$T_2$ is the temperature of the fuel salt at the measured point;
$P_1$ is the absolute pressure at the gas interface;
$P_2$ is the absolute pressure at the measured point;
$R_{He}$ is the gas constant of Helium;
$\Delta H_{He}$ is the enthalpy of solution of Helium in the fuel salt.

Accordingly, the solubility of Helium within the fuel salt is lowest at the gas interface.

This may be done equivalently for noble gases other than Helium.

Brief Description of the Drawings

Figure 1 shows a static MSR with downward coolant flow.
Figure 2 shows a static MSR with upward coolant flow.
Figure 3 shows a static MSR with slow upward flow of coolant salt.
Figure 4 is a graph of temperatures along a cross section of the bottom portion of the tube.
Figure 5A shows contour lines of the cladding temperature at the top of the fuel salt.
Figure 5B shows contour lines of the coolant outlet temperature.
Figure 6 shows a detail view of a fuel tube in a static MSR with upward coolant flow, using a displacement geometry to cool the fuel-gas interface.
Figure 7 is a graph of minimum fuel temperatures in the cross-section with height, as well as loci of temperatures where the saturation concentration would be equal to the fuel surface. Loci for several surface pressures are shown.
Figure 8 is a graph of minimum fuel temperatures in the cross-section with height, as well as loci of temperatures where the saturation concentration would be equal to the fuel surface. Loci for a variety of salt properties are shown.
Figure 9 is a graph of minimum fuel temperatures in the cross-section with height, as well as loci of temperatures where the saturation concentration would be equal to the fuel surface. The location of displacement geometry is marked to show its effect on the fuel temperature.

Detailed Description

In developing the safety case for the Static Molten Salt Reactor described in GB2508537 we have discovered that there are serious potential hazards associated with noble gas behaviour in molten salt fuelled reactors that have not been adequately addressed in current designs.

Potential mechanisms through which significant transients in reactor power could occur centre around the presence of gas bubbles within the reactor core, particularly within the critical region (i.e. the region in which the density of fissile isotopes is sufficient for a self-sustaining nuclear reaction to occur, during operation). Provided the concentration of gas dissolved in the fuel remains below its saturating concentration, bubbles cannot form and it is straightforward to calculate the impact on the reactor physics of the dissolved gasses. If bubbles form however, far more complex phenomena can ensue.

Xenon gas dispersed in solution in the fuel salt will have greater neutron absorbing effect than the same amount of gas in a bubble. This is because Xenon 135 is such a strong absorber that Xenon in the centre of a bubble containing Xe135 will be substantially shielded from neutrons by the bubble itself. Formation of a bubble from a supersaturated solution of gas in the fuel salt could therefore substantially reduce neutron absorption and hence result in an unwanted and uncontrolled increase in the reactivity of the core which will lead to a rapid and potentially unmanaged increase in reactor power.

Similar concerns arise with the other noble gases, as any gas bubbles will displace fuel. This can potentially lead to a large increase in reactivity if a significant volume of bubbles within the reactor are displaced at once, and rise to the surface from within the critical region of the fuel tube.

When previous data is looked at in light of these findings, a vital clue that problems may exist arose from the operation of the Molten Salt Reactor Experiment. In the report ORNL 4396 (p17) it was reported that apparently random blips in reactor power of around 10% occurred with significant frequency. Despite much investigation, a clear explanation of these power fluctuations was never reached. It was believed however that behaviour of gasses in the fuel salt circuit was responsible and an empirical solution that eliminated the blips by adjusting the pump pressure and gas sparging was achieved. The Molten Salt Reactor experiment operated at very low power of <10MW. Commercial reactors will operate at radically higher power. Since the magnitude of the Xenon effect is proportional to the power this potentially means that a fluctuation that may only be an irritation at very lower power may become a serious hazard at higher powers. In the Molten Salt Reactor Experiment there was the capability of changing the Helium sparging rate to control the Xenon bubble issue. No such capability exists in molten salt reactors such as those described in GB2508537 where gas loss from the fuel salt can only occur by passive diffusion into the gas space above the fuel salt

The problem of supersaturation may be greatly exacerbated by the actual nuclear fission process in the fuel salt.

At a power of 100kW/litre of fuel the number of fissions per second can be calculated thus:

$$\text{Fission energy} = 3.2e\text{-}11 \text{ Joules per fission}$$

$$\text{Reactor power} = 100{,}000 \text{ J/sec/litre of fuel salt}$$

Fission rate = 100,000 / 3.2e-11 = 3.12e+15 fissions per litre of fuel salt

Each fission produces 2 fission fragments which are high energy atomic nuclei travelling at a significant fraction of the speed of light. There are therefore 6e+15 such high energy particles produced per second per litre of salt. Their typical path length in a medium density material is about 20um.

A 10um diameter bubble would have an approximately 25% probability of being impacted by any fission fragment produced within a 20um diameter spherical volume of 4/3*3.14*1e-12 = 4e-12 litres. The bubble would therefore be impacted on the order of a thousand times per second.

The energy in such a fission fragment is orders of magnitude higher than the surface energy of the bubble and results in temperatures in the medium through which the particle passes in the 10's of thousands of degrees. It is likely therefore that it would result in the destruction of the bubble, with the gas content redissolving in the salt. A very high level of supersaturation of gas in the molten salt may therefore be maintained so long as fission continues. A feedback loop between the rate of fission and the reactivity of the reactor core may therefore establish and could readily lead to instability.

Other potential phenomena include deposition of bubbles of gas on solid surfaces within the reactor core. Such bubbles could accumulate for some time and be displaced from the solid surfaces by a shock wave, vibration or flow disturbance of the fuel salt. In that event a large amount of neutron absorbing material may exit the core in a short time period resulting in a sudden increase in core reactivity and potentially a damaging power surge. Furthermore the removal of void volume from the core, replaced by fissile fuel salt (i.e. increasing the average fuel salt density within the critical region), could lead to another increase in reactivity.

While these phenomena are of concern in all molten salt reactors, they are particularly concerning in the static molten salt reactor class because the fuel salt in such reactors flows at a relatively low speed under natural convection and bubbles are therefore more likely to form and accumulate on the inner surface of the fuel tubes than in reactors where the salt is pumped at relatively high velocity.

It is evident that it will be exceptionally difficult to ensure that no unexpected hazardous effects could occur in a molten salt reactor where bubbles are allowed to form within the critical region of the reactor core during operation. It is therefore highly desirable that the concentration of dissolved gasses in the molten salts in the core of such reactors be maintained at below their saturating concentrations, thereby making formation of bubbles within the core region impossible.

The solubility of noble gasses in molten salts increases with increasing temperature, the opposite of the behaviour of gasses in water (ORNL-2931 Reactor Chemistry Division annual progress report Jan 31 1960). The consequence of this is that where there is a gas/salt interface where the salt is at its highest temperature, the gas will dissolve in the salt. As the salt is cooled, the gas can therefore become supersaturated in the salt and be prone to forming bubbles.

Additionally, as fission gasses are continuously produced in the fuel salt, the concentration of these gasses in the fuel salt will rise until off-gassing occurs at a rate equal to production. In a well-mixed salt where the concentration is the same in all locations the off-gassing will occur where the solubility is lowest - if this is not the surface, then bubbles will come out of solution lower down in the fuel.

In the description below, we propose arranging the design of the molten salt reactor so that the salt in contact with the gas phase has a lower gas solubility than any other point in the fuel. Dissolved gas will therefore diffuse out the salt across the interface without formation of bubbles.

Most Molten Salt Reactor designs, including that described in GB2508537 take advantage of the increased buoyancy of molten salts as they heat to partially or completely drive the circulation of the molten salt. This necessarily requires the direction of salt flow to be upwards. Unfortunately however, this also means that the coolant salt temperature is highest at the top of the fuel tube which makes it difficult to avoid the fuel salt in that region being hotter and therefore having a higher solubility for noble gasses than further down the core, especially at the bottom of the tubes, where the coolant is at a lower temperature.

One way to lower the temperature of the fuel salt near the gas interface is therefore to reverse the direction of flow of the coolant salt to vertically downwards so the coolant salt temperature increases as it flows down through the core. This has the disadvantage of opposing the natural convection forces but ensures that the upper regions of the flow circuit are at the lower temperature.

Where reversal of coolant flow direction is not possible, for example in static molten salt reactors where coolant flow is by natural convection, it is still possible to ensure that the upper surface of the fuel salt is the point of lowest gas solubility in the fuel salt. This can be achieved by one or a combination of the following methods:

- Reducing heat production in the fuel salt close to the top of the tube by screening it with neutron absorbing materials

- Introducing a secondary flow of cool coolant salt to cool the top region of the fuel tube and fuel salt

- Cooling the gas space above the fuel salt in the tube to temperatures lower than the lowest temperature of the tube wall anywhere in the tube so that convection of the gas cools the upper surface of the fuel salt despite the coolant outside the tube at that surface level being hotter. This cooling of the gas space can be achieved by a supplementary flow of cooler coolant salt, emergence of the part of the fuel tube containing gas above the surface of the coolant salt into a region of lower temperature or actively passing cool gas into the gas space in the fuel tube.

- Placing a baffle a short distance below the fuel salt surface so that bulk convective flow from the hot region further down the tube does not reach the surface while still allowing slow mixing of molten salt and diffusion of gas through the baffle to the surface

- Maintaining a relatively slow flow velocity of the coolant so that the wall of the tube at the bottom, where coolant temperature is lowest, is intermediate between the temperature of the bulk fuel salt and the coolant salt with that intermediate temperature being higher than the surface temperature of the fuel salt at the top of the tube. In this method it is possible that the gas space above the fuel, in contact with the fuel tube above the level of the fuel salt, is cooler than the walls of the tube where the coolant is at its lowest temperature but is in contact with the hot fuel salt.

- Providing an insert to displace the salt from the centre of the tube in a region near and at the surface, keeping only a thin perimeter of salt in contact with the walls. This thin band of salt will have the same cooled surface area as before, but with only a very small volume to generate heat. Thus, the remaining salt will be kept cool by the coolant

- Adding insulation to the bottom of the fuel tube to increase the temperature of the fuel inside

- Injecting coolant above the bottom of the fuel tube, leaving a lower section uncooled

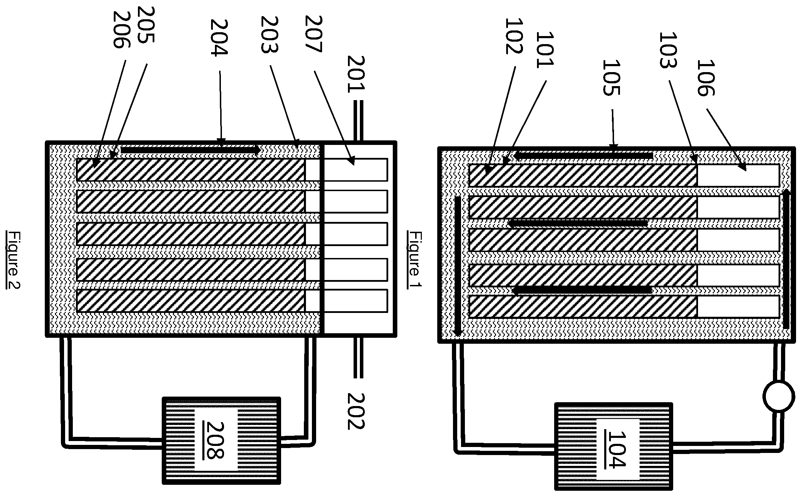

Figure 1 shows a static MSR with downward coolant flow. The reactor is composed of vertical fuel tubes 101 containing the fuel salt 102 which can optionally be separated by a moderator structure of graphite or other moderating material (not shown). The coolant 103 is pumped around a circuit comprising the reactor core and a heat exchanger 104 so that it flows downwards 105 past the fuel tubes ensuring that the fuel salt at the top of the fuel tube, i.e. adjacent to the gas space 106, is the coolest in the fuel tube due to the combination of reduced power density due to the fuel salt location at the outside edge of the reactor core and the lower temperature of the coolant in contact with the top of the fuel tube.

Figure 2 shows a static MSR with upward coolant flow. The static molten salt reactor has vertically oriented fuel tubes 205 where the top, gas filled portion 207 of the fuel tube emerges from circulating coolant salt 203 into a region of lower temperature than the coolant salt. The coolant salt circulates by natural convection 204 through the core and a heat exchanger 208. The gas space above the coolant salt is cooled by a cool gas system comprising a cool gas inlet 201 and a cool gas outlet 202, and in turn cools the upper portion of the fuel tube which in turn cools the gas inside the fuel tube. A convection cell results with cool gas falling down the outer regions inside the fuel tube, being heated by contact with the upper surface of the fuel salt and then rising up the centre of the fuel tube. This results in a cooling of the very uppermost layer of the fuel salt, creating the low temperature gas/salt interface needed to maintain the fuel salt below saturating gas concentrations in the bulk of the fuel salt.

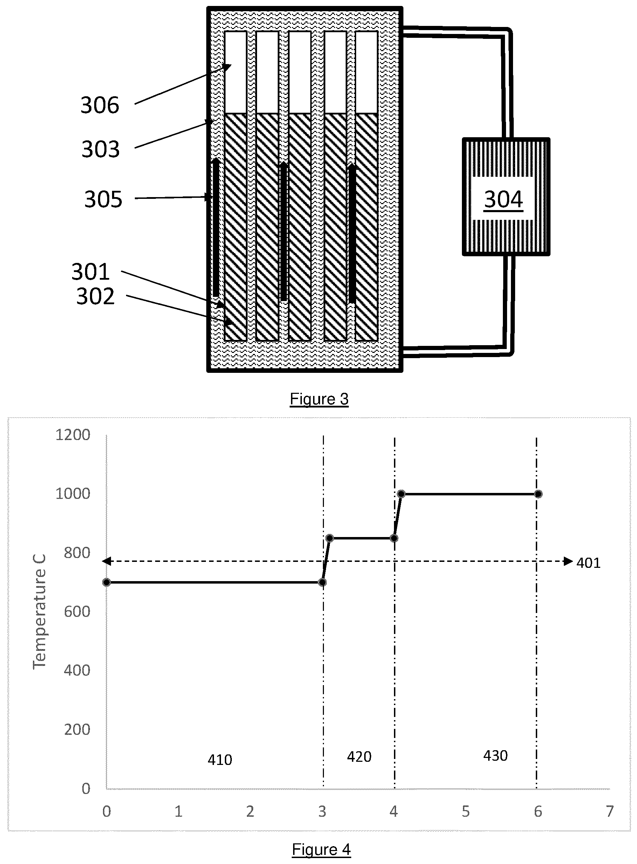

Figure 3 shows a static MSR with slow upward flow of coolant salt. The reactor is composed of vertical fuel tubes 301 containing the fuel salt 302 which can optionally be separated by a moderator structure of graphite or other moderating material. The coolant salt 303 circulates upwards 305 through the core and down through the heat exchanger 304 only by natural convection with a relatively slow flow rate. The flow rate of the coolant and the power density in the fuel salt are such that the tube wall temperature at the bottom of the tube is higher than the temperature of the coolant emerging from the top of the core. This means that the gas space 306 will be cooler than any of the fuel salt, due to cooling by the coolant emerging from the core. The temperature of the upper surface of the fuel salt is lower than that anywhere else in the fuel salt due to the combined effect of cooling of the uppermost fuel salt layer by the hot coolant and cooling of that surface by gas convection in the gas space above the coolant.

Figure 4 is a graph of temperatures along a cross section of the bottom portion of the tube. The graph shows the temperature in three regions - the coolant salt at the tube bottom 410, the bottom tube wall 420, and the fuel salt 430. As can be seen from the graph, the temperature of the coolant salt at the tube bottom is less than that of the tube wall, which is in turn less than the temperature of the fuel salt. The coolant temperature at the top of the fuel tube 401 is less than the temperature at the bottom tube wall - which means that dissolved gases will preferentially outgas into the gas space at the top of the tube, rather than forming bubbles on the tube wall.

The relative temperatures of the fuel tube wall, the coolant salt at the bottom of the tube, and the coolant salt at the top of the tube will depend on the fuel tube dimensions, the flow rate of the coolant salt, the temperature of the coolant salt that enters the core, and the power density of the nuclear reaction. In particular, a model that has been found to be able to test the viability of solutions contains:

- The average power density in the fuel salt
- The diameter of each fuel tube
- The height of each fuel tube
- The thickness of an annulus of coolant salt around the fuel tube (i.e. how much space there is for coolant to flow around the tube)
- The coolant inlet temperature
- The coolant outlet temperature
- The temperature of the fuel tube cladding at the bottom of the fuel tube

The model can be used in two ways - either assuming that the tubes generate heat uniformly along their length (up to the level of the top of the fuel salt) for a simpler model, or taking into account the vertical gradient of the energy production in the fuel tube for a more accurate model. For example, the simpler model may be used to identify target parameter values, which are then checked with the more accurate model or experimentation.

For a given power density, coolant salt inlet temperature, fuel tube length, fuel tube diameter, and annular thickness, the coolant outlet temperature and the temperature of the fuel tube at the top of the fuel salt can be calculated. The difference between the coolant outlet temperature and the temperature of the fuel tube cladding at the top of the fuel salt will be equal to the difference between the coolant inlet temperature and the temperature of the fuel tube cladding at the bottom. The coolant inlet temperature is a defined parameter, and can therefore be used to calculate the temperature of the cladding at the bottom of the fuel tube.

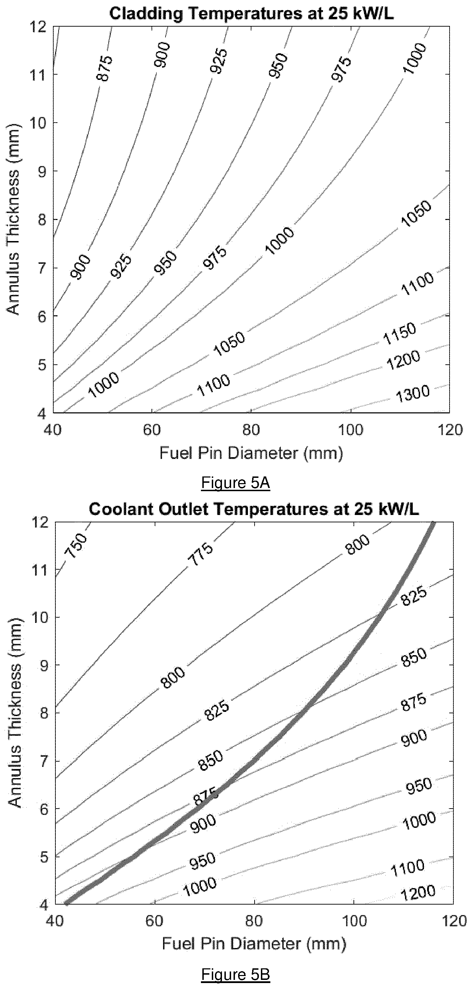

As a further example, by fixing all but two of the input variables in the model (e.g. fixing the power density, inlet temperature, and fuel tube length), graphs can be plotted of the coolant outlet temperature and cladding temperatures as dependent on the other two variables (in this case, the fuel pin diameter and annular thickness. An example of this is shown in Figure 5A and 5B, where Figure 5A shows contour lines of the cladding temperature at the top of the fuel salt, and Figure 5B shows contour lines of the coolant outlet temperature, with an additional bold line 801 showing the region in which the temperature at the top of the cladding is 1000 °C. This can be used to determine the difference between the coolant temperature and the fuel tube cladding temperature, and hence determine which regions of the graph correspond to the required relationship that the tube wall temperature at the bottom of the tube is greater than the coolant salt temperature at the top of the tube.

Other simulation, modelling or prototyping methods and techniques as known in the art may alternatively be used to determine the parameters required.

It will be appreciated that this analysis is only needed for simulation - for an actual reactor, the temperatures can simply be measured to determine whether they are in the correct relationship.

Optionally, neutron absorbing structures can be inserted inside or outside the fuel tube in any position from just below the surface of the fuel salt to part way up the gas space in the fuel tube so that fission is suppressed in the uppermost layers of the fuel salt.

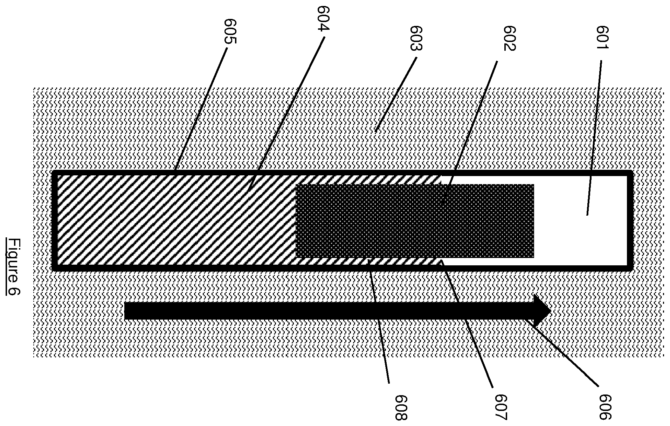

Figure 6 shows a detail view of a fuel tube in a static MSR with upward coolant flow 606, using a displacement geometry 602 to cool the fuel-gas interface 607. Heat generated in the Fuel Salt 604 can only be removed through the fuel tube wall 605. In most of the fuel, this leads to a large temperature rise in the centre of the fuel tube as heat is generated there volumetrically. In the thin annulus region 608, the volume of heat-producing fuel is sharply reduced, but the surface area of the fuel tube wall remains the same as a tube without the displacement geometry, leading to a fuel-gas interface temperature far closer to the coolant temperature than the rest of the fuel.

The general equation for gas solubility in a fluid is given by Henry's law: $c_a = P * H^{cp}$, where $c_a$ is the solubility in Mol/cc, P is the partial pressure of the gas at the surface in atmospheres (1 atm = 101325 Pa), and $H^{cp}$ is the Henry Solubility of the fluid. This can be made temperature dependent by substituting $H^{cp}$ with $H_{(T)} = H^o * e^{\left[\frac{-\Delta H}{R} * \left(\frac{1}{T} - \frac{1}{T^o}\right)\right]}$, where H(T) is the updated henry's constant for temperature T, H° is the henry's constant at reference temperature T°, $\Delta H$ is the enthalpy of solution, and R is the gas constant for the gas involved. Note that the "H" in the variables $\Delta H$ and H are entirely different quantities, and should not be confused.

Any bubble surfaces that formed deep in the salt would be at the hydrostatic pressure of the salt at that depth. This means that the partial pressure of the gas in the bubble would be equal to the hydrostatic pressure (for a single gas). Thus, when calculating the saturation concentration in below-surface regions, the salt hydrostatic pressure at that point is used rather than the salt surface pressure.

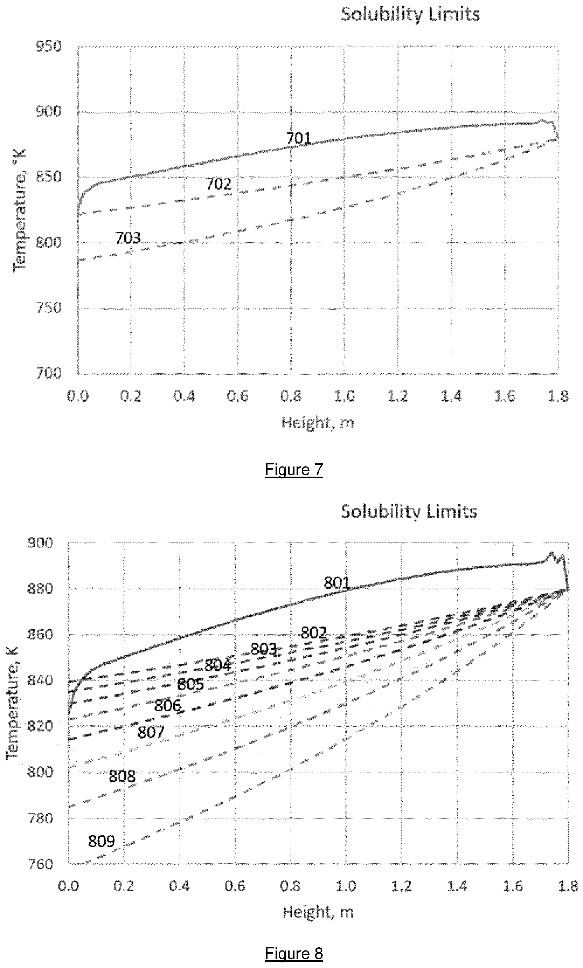

Figure 7 shows the temperature of the fuel salt 701 along the height of a fuel pin cooled by upwards flow. To enumerate this example, if $T^o = 873.15$ °K, $H° = 1.94 * 10^{-8}$ mol/cc/atm, $\Delta H = 353390$ J/kg, and R = 63.33 J/kg/K (This is the measured Xenon gas solubility behaviour in a 53-47 mol% NaF-ZrF$_4$ mixture, used as an example) then salt at 1 Bar of pressure and a temperature of 879.7 °K will saturate at a gas concentration of $2.0079*10^{-8}$ Mol/cc.

As the fuel is 1800 mm deep and has an average density of 3181.7 kg/m$^3$, the absolute pressure at the bottom of the pin is 1.561 Bar. The temperature of the salt at the bottom of the pin is 825.3 °K, so the fuel there will saturate at the higher concentration of $2.0633*10^{-8}$ Mol/cc despite the lower temperature.

For the fuel at the bottom of the tube to saturate at the same gas concentration as the top, the temperature at the bottom would have to be equal to the temperature $T_2 = \dfrac{1}{-\frac{R}{\Delta H}*ln\left(\frac{P_1}{P_2}\right)+\frac{1}{T_1}}$, where $P_1$ and $T_1$ are the pressure and temperature at the fuel surface, and $P_2$ and $T_2$ are the pressure and temperature at the bottom of the tube. This relationship holds true for any depth in the fuel. For the example shown in Figure 7, this limiting temperature is 822.0 °K at the fuel bottom. A lower surface pressure of 0.5 Bar allows the limiting temperature to be lower at 786.4 °K.

Therefore, to ensure that the Xenon does not come out of solution except at the gas interface, the reactor is configured such that $T_2 > \dfrac{1}{-\frac{R}{\Delta H}*ln\left(\frac{P_1}{P_2}\right)+\frac{1}{T_1}}$. It should be noted that the examples discussed earlier where $T_2>T_1$ will always satisfy this relationship, as the right hand side will always be less than $T_1$.

A locus 702 of temperatures are shown in Figure 7. This locus shows the temperature the fuel salt would have to fall to at that height in order to match the solubility of the fuel surface with a surface pressure of 1 Bar. A second locus 703 is shown for a different absolute pressure at the surface of 0.5 Bar.

As the solubility limits described by the Loci 702 and 703 are relative to the fuel surface, they are not affected by the constant H°.

In a well-mixed system where the fuel surface is saturated and cannot dissolve more gas, the loci show the temperatures the fuel would have to fall to in the rest of the tube to also become saturated.

While the above examples have focussed on Xenon as an exemplary gas of concern, it may be possible to design reactors which could tolerate limited formation of Xenon bubbles, but would not be able to tolerate the formation of bubbles of lower atomic number noble gases while still operating safely. For such reactors, the above analysis can be conducted, but with the gas constant R substituted for the gas constant of Helium, Neon, Argon, or Krypton, and the enthalpy of solution $\Delta H$ substituted for the enthalpy of solution of that gas with the fuel salt. The gas constant R (in J/kg °K) is higher for lighter noble gasses, as is $\Delta H$ (in J/kg), though it rises at a slower pace. This means that any reactor which satisfies this criterion for a certain noble gas (e.g. Argon) also satisfies it for all noble gases with lower atomic number (e.g. Helium and Neon), as the value of $R/\Delta H$ will increase and thus the minimum temperature $T_2$ will decrease.

Figure 8 shows how the enthalpy of solution $\Delta H$ affects the loci of saturation temperature, with loci 802 to 809 at $\Delta H$ = 150kJ/kg (802), 200kJ/kg (803), 250kJ/kg (804), 300kJ/kg (805), 350kJ/kg (806), 400kJ/kg (807), 450kJ/kg (808), and 500kJ/kg (809).

For many combinations of noble gas and molten salt $\Delta H$ can be obtained from the literature. Where such a previous measurement is not available, $\Delta H$ can be experimentally determined by a process of:

1. Measuring the solubility of the gas in the molten salt at several different pressures at each of several different temperatures;
2. Finding the Henry's law constant $H^{cp}$ for each temperature;
3. Plotting $H^{cp}$ against temperature, and fitting the resulting plot to the expected variation of $H^{cp}$ with temperature (calculated from Henry's Law and the Van't Hoff equation).

Each of these steps will be considered in more detail below.

Solubility of the gas in the molten salt at a given temperature and pressure can be measured by any suitable means. One example is described in W. R. Grimes, N. V. Smith, and G. M. Watson, J. Phys. Chem. 62, 862 (1958), where the gas solubility in a salt can be measured by allowing a sample of salt to saturate with a pure stream of the test gas while maintaining conditions at the temperature and pressure of the desired measurement point. This salt sample can then be isolated and sparged with a different gas to remove the dissolved test gas. The level of test gas in the outlet stream can then be measured and the saturation concentration calculated. Note that Grimes et. al. uses the symbol K for the Henry's law constant $H^{cp}$.

The Henry's law constant $H^{cp}$ is the gradient of a graph of solubility against pressure for a given temperature, or can be obtained from a single measurement by dividing the solubility measurement by the pressure (though as always, taking a gradient from multiple measurements will provide improved accuracy).

Once $H^{cp}$ has been found for a set of temperatures, a plot of the temperature-dependent Henry's constant H will follow the Van't Hoff equation:

$$H(T) = H^o * e^{\left[\frac{-\Delta H}{R}\left(\frac{1}{T}-\frac{1}{T^o}\right)\right]}$$

Where H° is the value of H at a reference temperature T°, and R is the gas constant of the gas. The reference temperature and corresponding reference value of H° can be chosen as one of the measured points, and then the parameter $\Delta$H can be varied to obtain a best fit (e.g. measured as a minima in the total squared error between the points and the curve). The value of $\Delta$H which produces the best fit can then be used to determine the temperature relationship set out above for that particular gas/molten salt pair.

The above derivation is identical regardless of the units used (provided temperature is measured in a system such as Kelvin which treats absolute zero as 0). The solubility is typically expressed as moles per unit volume (often $mol/cm^3$), H° is typically expressed as moles per cubic centimetre per atmosphere ($mol/cm^3/atm$) or equivalent units. $\Delta$H is measured in Joules per kilogram (care should be taken with units of $\Delta$H and R - $\Delta$H is often given in cal/mol, so should be converted for use with SI values of R).

$\Delta$H for a given gas/molten salt pair will be independent of temperature and pressure (provided the gas is a gas and the molten salt is a liquid). Therefore, the choice of temperature and pressure values used to determine $\Delta$H should not affect the final result. However, suitable values for pressure would be, for example, the maximum and minimum operating pressure of the reactor, and their midpoint, or 0.5 atm, 1 atm, and 1.5 atm (51 kPa, 101 kPa and 152 kPa). Suitable values for temperature would be, for example, the maximum, and minimum operating temperature and their midpoint, or at 100, 200, and 300 degrees above the melting point of the molten salt.

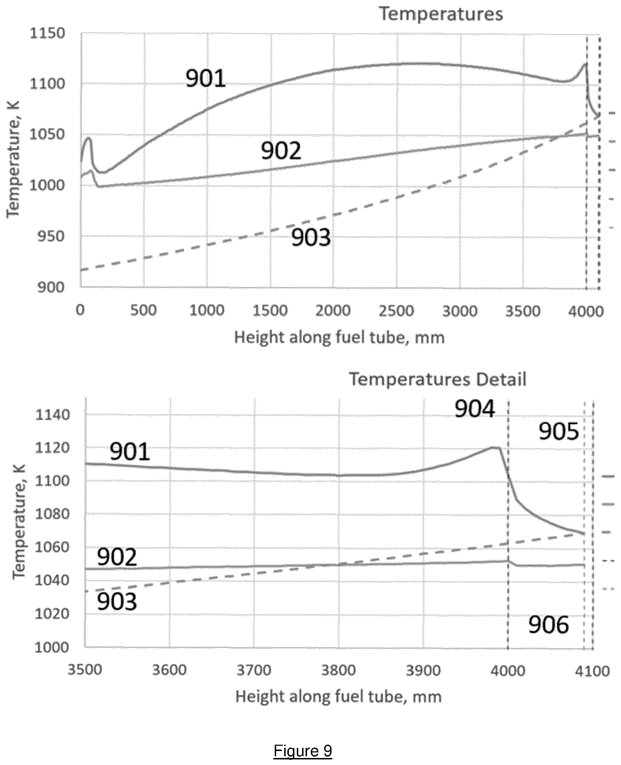

Figure 9a and Figure 9b show the effect of a displacement geometry of the type shown in Figure 6, simulated with CFD. The fuel temperature 901 is lowered in the region affected by the geometry, bringing it closer to the coolant temperature 902. The saturation temperature locus 903 is kept below the fuel temperature 901 at all points in the tube. Figure 9b better shows the bottom edge 904 and top edge 905 of the geometry, as well as the fuel surface 906.

**Claims**

1. A molten salt fission reactor comprising:

   a reactor core comprising a plurality of fuel tubes (101, 205, 301), each fuel tube containing:

   a fuel salt (102, 302, 206), the fuel salt being a molten salt of one or more fissile isotopes;
   a gas interface of the fuel salt, which is a surface of the fuel salt in contact with a gas space (106, 207, 306) during operation of the reactor;

   a fuel salt cooling system configured to cool the fuel salt, the fuel salt cooling system comprising

   a coolant tank containing a coolant liquid (103, 203, 303) in which the fuel tubes are at least partially immersed, and
   a heat exchanger (104, 208, 304) for extracting heat from the coolant liquid;

   **characterised in that**:
   the fuel salt cooling system is configured such that during operation of the reactor, for all points within the fuel salt within each fuel tube except at the respective gas interface:

$$T_2 > \frac{1}{-\frac{R_{He}}{\Delta H_{He}}*ln\left(\frac{P_1}{P_2}\right)+\frac{1}{T_1}}$$

   where:

   $T_1$ is the temperature of the fuel salt at the gas interface;
   $T_2$ is the temperature of the fuel salt at the measured point;
   $P_1$ is the absolute pressure at the gas interface;
   $P_2$ is the absolute pressure at the measured point;
   $R_{He}$ is the gas constant of Helium;
   $\Delta H_{He}$ is the enthalpy of solution of Helium in the fuel salt

2. A molten salt fission reactor according to claim 1, wherein the fuel salt cooling system is configured such that during operation of the reactor, for all points within the fuel salt within each fuel tube except at the respective gas interface:

$$T_2 > \frac{1}{-\frac{R_X}{\Delta H_X} * ln\left(\frac{P_1}{P_2}\right) + \frac{1}{T_1}}$$

where:

$R_X$ is the gas constant of a noble gas;
$\Delta H_X$ is the enthalpy of solution of the noble gas in the fuel salt;
the noble gas is one of Neon, Argon, Krypton, or Xenon.

3. A molten salt fission reactor according to claim 1 or 2, wherein the temperature $T_1$ of the fuel salt at each gas interface is less than the temperature $T_2$ of the fuel salt in all other regions of the respective fuel tube.

4. A molten salt fission reactor according to any preceding claim, wherein the coolant liquid is pumped such that, during operation of the reactor, it travels downwards when in contact with the fuel tubes.

5. A molten salt fission reactor according to any preceding claim, wherein:

each fuel tube comprises an upper section which contains the respective gas space;
at least part of the upper section protrudes into a coolant gas space located above the coolant liquid during operation of the reactor;
the molten salt fission reactor further comprises a gas cooling system configured to cool the coolant gas space.

6. A molten salt fission reactor according to any preceding claim, wherein each fuel tube comprises a baffle immersed in the fuel salt which extends across the fuel tube.

7. A molten salt fission reactor according to any of claims 1 to 3, wherein the coolant liquid circulates through the fuel tubes only by natural convection, and the flow rate of the coolant liquid and the power density of the fuel salt are such that the temperature of a wall of the fuel tube at the bottom of the fuel tube is greater than a temperature of the coolant at the top of the critical region.

8. A molten salt fission reactor according to any preceding claim, wherein the upper sections of each fuel tube are screened with neutron absorbing materials, such that when in use, the heat production of fuel salt within the upper section of each fuel tube is less than in the rest of the fuel salt within the fuel tube.

9. A molten salt fission reactor according to any preceding claim, wherein the cooling system is configured to direct a secondary flow of coolant salt to a top region of the fuel tube.

10. A molten salt fission reactor according to any preceding claim, wherein each fuel tube comprises a displacement element extending from the gas interface into the fuel salt, the displacement element being configured to displace fuel salt from the central axis of the fuel tubes.

11. A molten salt fission reactor according to any preceding claim, wherein a region at the bottom of each fuel tube is more thermally insulating than other regions of each fuel tube.

12. A molten salt fission reactor according to any preceding claim, wherein the cooling system is configured such that the region at the bottom of each fuel tube is not cooled directly by the coolant liquid.

13. A method of operating a molten salt fission reactor, wherein the molten salt fission reactor comprises:

a reactor core comprising a plurality of fuel tubes (101, 205, 301), each fuel tube containing:

a fuel salt (102, 302, 206), the fuel salt being a molten salt of one or more fissile isotopes;
a gas interface of the fuel salt, which is a surface of the fuel salt in contact with a gas space (106, 207, 306) during operation of the reactor;

a fuel salt cooling system configured to cool the fuel salt, the fuel salt cooling system comprising

a coolant tank containing a coolant liquid (103, 203, 303) in which the fuel tubes are at least partially immersed, and
a heat exchanger (104, 208, 304) for extracting heat from the coolant liquid;

the method **characterised by** maintaining temperatures of the fuel salt such that that during operation of the reactor, for all points within the fuel salt within each fuel tube except at the respective gas interface:

$$T_2 > \frac{1}{-\frac{R_{He}}{\Delta H_{He}} * ln\left(\frac{P_1}{P_2}\right) + \frac{1}{T_1}}$$

where:

$T_1$ is the temperature of the fuel salt at the gas interface;
$T_2$ is the temperature of the fuel salt at the measured point;
$P_1$ is the absolute pressure at the gas interface;
$P_2$ is the absolute pressure at the measured point;
$R_{He}$ is the gas constant of Helium;
$\Delta H_{He}$ is the enthalpy of solution of Helium in the fuel salt.

**Patentansprüche**

1.  Salzschmelz-Spaltungsreaktor, Folgendes umfassend:
    einen Reaktorkern mit einer Vielzahl von Brennstoffrohren (101, 205, 301), wobei jedes Brennstoffrohr Folgendes enthält:

    ein Brennstoffsalz (102, 302, 206), wobei das Brennstoffsalz ein geschmolzenes Salz aus einem oder mehreren spaltbaren Isotopen ist;
    eine Gasschnittstelle des Brennstoffsalzes, die eine Oberfläche des Brennstoffsalzes ist, die während des Betriebs des Reaktors mit einem Gasraum (106, 207, 306) in Kontakt steht;
    ein Brennstoffsalz-Kühlsystem, das zum Kühlen des Brennstoffsalzes konfiguriert ist, wobei das Brennstoffsalz-Kühlsystem Folgendes umfasst:

    einen Kühlmitteltank, der eine Kühlmittelflüssigkeit (103, 203, 303) enthält, in welche die Brennstoffrohre mindestens teilweise eingetaucht sind, und
    einen Wärmetauscher (104, 208, 304) zum Entziehen von Wärme aus der Kühlmittelflüssigkeit;
    **dadurch gekennzeichnet, dass**:
    das Brennstoffsalz-Kühlsystem so konfiguriert ist, dass, während des Betriebs des Reaktors, für alle Punkte innerhalb des Brennstoffsalzes, innerhalb jedes Brennstoffrohrs mit Ausnahme der jeweiligen Gasschnittstelle, folgende Gleichung gilt:

$$T_2 > \frac{1}{-\frac{R_{He}}{\Delta H_{He}} * ln\left(\frac{P_1}{P_2}\right) + \frac{1}{T_1}}$$

wo:

$T_1$ die Temperatur des Brennstoffsalzes an der Gasschnittstelle ist;
$T_2$ die Temperatur des Brennstoffsalzes am Messpunkt ist;
$P_1$ der Absolutdruck an der Gasschnittstelle ist;
$P_2$ der Absolutdruck am Messpunkt ist;
$R_{He}$ die Gaskonstante von Helium ist;
$\Delta H_{He}$ die Lösungsenthalpie von Helium im Brennstoffsalz ist.

2.  Salzschmelz-Spaltungsreaktor nach Anspruch 1, wobei das Brennstoffsalz-Kühlsystem so konfiguriert ist, dass, während des Betriebs des Reaktors, für alle Punkte innerhalb des Brennstoffsalzes, innerhalb jedes Brennstoffrohrs

mit Ausnahme der jeweiligen Gasschnittstelle, folgende Gleichung gilt:

$$T_2 > \frac{1}{-\frac{R_X}{\Delta H_X}*ln\left(\frac{P_1}{P_2}\right)+\frac{1}{T_1}}$$

wo:

$R_X$ die Gaskonstante eines Edelgases ist;
$\Delta H_X$ die Lösungsenthalpie des Edelgases im Brennstoffsalz ist;
das Edelgas eines von Neon, Argon, Krypton oder Xenon ist.

3. Salzschmelz-Spaltungsreaktor nach Anspruch 1 oder 2, wobei die Temperatur $T_1$ des Brennstoffsalzes an jeder Gasschnittstelle niedriger ist als die Temperatur $T_2$ des Brennstoffsalzes in allen anderen Bereichen des jeweiligen Brennstoffrohrs.

4. Salzschmelz-Spaltungsreaktor nach einem der vorhergehenden Ansprüche, wobei die Kühlmittelflüssigkeit so gepumpt wird, dass sie während des Betriebs des Reaktors bei Kontakt mit den Brennstoffrohren nach unten fließt.

5. Salzschmelz-Spaltungsreaktor nach einem der vorhergehenden Ansprüche, wobei:

jedes Brennstoffrohr einen oberen Abschnitt umfasst, der den jeweiligen Gasraum enthält;
mindestens ein Teil des oberen Abschnitts in einen Kühlmittelgasraum vorspringt, der während des Betriebs des Reaktors oberhalb der Kühlmittelflüssigkeit positioniert ist;
der Salzschmelz-Spaltungsreaktor ferner ein Gaskühlsystem umfasst, das zum Kühlen des Kühlmittelgasraums konfiguriert ist.

6. Salzschmelz-Spaltungsreaktor nach einem der vorhergehenden Ansprüche, wobei jedes Brennstoffrohr eine in das Brennstoffsalz eingetauchte Umlenkung umfasst, die sich über das Brennstoffrohr erstreckt.

7. Salzschmelz-Spaltungsreaktor nach einem der Ansprüche 1 bis 3, wobei die Kühlmittelflüssigkeit nur durch natürliche Konvektion durch die Brennstoffrohre zirkuliert und die Durchflussrate der Kühlmittelflüssigkeit und die Leistungsdichte des Brennstoffsalzes derart sind, dass die Temperatur einer Wand des Brennstoffrohrs am Boden des Brennstoffrohrs größer ist als eine Temperatur des Kühlmittels am oberen Ende des kritischen Bereichs.

8. Salzschmelz-Spaltungsreaktor nach einem der vorhergehenden Ansprüche, wobei die oberen Abschnitte jedes Brennstoffrohrs mit neutronenabsorbierenden Materialien abgeschirmt sind, sodass bei Gebrauch die Wärmeproduktion des Brennstoffsalzes innerhalb des oberen Abschnitts jedes Brennstoffrohrs geringer ist als die im Rest des Brennstoffsalzes innerhalb des Brennstoffrohrs.

9. Salzschmelz-Spaltungsreaktor nach einem der vorhergehenden Ansprüche, wobei das Kühlsystem konfiguriert ist, um einen sekundären Strom von Kühlmittelsalz zu einem oberen Bereich des Brennstoffrohrs zu richten.

10. Salzschmelz-Spaltungsreaktor nach einem der vorhergehenden Ansprüche, wobei jedes Brennstoffrohr ein Verdrängungselement umfasst, das sich von der Gasschnittstelle in das Brennstoffsalz erstreckt, wobei das Verdrängungselement konfiguriert ist, um Brennstoffsalz von der Mittelachse der Brennstoffrohre zu verdrängen.

11. Salzschmelz-Spaltungsreaktor nach einem der vorhergehenden Ansprüche, wobei ein Bereich am Boden jedes Brennstoffrohrs thermisch stärker isolierend ist als andere Bereiche jedes Brennstoffrohrs.

12. Salzschmelz-Spaltungsreaktor nach einem der vorhergehenden Ansprüche, wobei das Kühlsystem so konfiguriert ist, dass der Bereich am Boden jedes Brennstoffrohrs nicht direkt durch die Kühlmittelflüssigkeit gekühlt wird.

13. Verfahren zum Betreiben eines Salzschmelz-Spaltungsreaktors, wobei der Salzschmelz-Spaltungsreaktor Folgendes umfasst:
einen Reaktorkern, der eine Vielzahl von Brennstoffrohren (101, 205, 301) umfasst, wobei jedes Brennstoffrohr Folgendes enthält:

ein Brennstoffsalz (102, 302, 206), wobei das Brennstoffsalz ein geschmolzenes Salz aus einem oder mehreren spaltbaren Isotopen ist;

eine Gasschnittstelle des Brennstoffsalzes, die eine Oberfläche des Brennstoffsalzes ist, die während des Betriebs des Reaktors mit einem Gasraum (106, 207, 306) in Kontakt steht;

ein Brennstoffsalz-Kühlsystem, das zum Kühlen des Brennstoffsalzes konfiguriert ist, wobei das Brennstoffsalz-Kühlsystem Folgendes umfasst:

einen Kühlmitteltank, der eine Kühlmittelflüssigkeit (103, 203, 303) enthält, in welche die Brennstoffrohre mindestens teilweise eingetaucht sind, und

einen Wärmetauscher (104, 208, 304) zum Entziehen von Wärme aus der Kühlmittelflüssigkeit;

wobei das Verfahren **dadurch gekennzeichnet ist, dass** die Temperaturen des Brennstoffsalzes so gehalten werden, dass während des Betriebs des Reaktors, für alle Punkte innerhalb des Brennstoffsalzes innerhalb jedes Brennstoffrohrs, mit Ausnahme der jeweiligen Gasschnittstelle, folgende Gleichung gilt:

$$T_2 > \frac{1}{-\frac{R_{He}}{\Delta H_{He}}*ln\left(\frac{P_1}{P_2}\right)+\frac{1}{T_1}}$$

wo:

$T_1$ die Temperatur des Brennstoffsalzes an der Gasschnittstelle ist;
$T_2$ die Temperatur des Brennstoffsalzes am Messpunkt ist;
$P_1$ der Absolutdruck an der Gasschnittstelle ist;
$P_2$ der Absolutdruck am Messpunkt ist;
$R_{He}$ die Gaskonstante von Helium ist;
$\Delta H_{He}$ die Lösungsenthalpie von Helium im Brennstoffsalz ist.

**Revendications**

1. Réacteur de fission à sels fondus comprenant :
   un cœur de réacteur comprenant une pluralité de tubes à combustible (101, 205, 301), chaque tube à combustible contenant :

   un sel combustible (102, 302, 206), le sel combustible étant un sel fondu d'un ou plusieurs isotopes fissiles ;
   une interface gazeuse du sel combustible, qui est une surface du sel combustible en contact avec un espace de gaz (106, 207, 306) pendant un fonctionnement du réacteur ;
   un système de refroidissement de sel combustible configuré pour refroidir le sel combustible, le système de refroidissement de sel combustible comprenant
   une cuve de liquide de refroidissement contenant un liquide de refroidissement (103, 203, 303) dans laquelle les tubes à combustible sont au moins partiellement immergés, et
   un échangeur de chaleur (104, 208, 304) pour extraire de la chaleur du liquide de refroidissement ;
   **caractérisé en ce que** :
   le système de refroidissement de sel combustible est configuré de telle sorte que pendant le fonctionnement du réacteur, pour tous les points au sein du sel combustible au sein de chaque tube à combustible excepté au niveau de l'interface gazeuse respective, on ait :

$$T_2 > \frac{1}{-\frac{R_{He}}{\Delta H_{He}}*ln\left(\frac{P_1}{P_2}\right)+\frac{1}{T_1}}$$

où :

$T_1$ est la température du sel combustible au niveau de l'interface gazeuse ;
$T_2$ est la température du sel combustible au niveau du point mesuré ;
$P_1$ est la pression absolue au niveau de l'interface gazeuse ;

$P_2$ est la pression absolue au niveau du point mesuré ;
$R_{He}$ est la constante gazeuse de l'hélium ;
$\Delta H_{He}$ est l'enthalpie de solution d'hélium dans le sel combustible.

2. Réacteur de fission à sels fondus selon la revendication 1, dans lequel le système de refroidissement de sel combustible est configuré de telle sorte que pendant le fonctionnement du réacteur, pour tous les points au sein du sel combustible au sein de chaque tube de combustible excepté au niveau de l'interface gazeuse respective, on ait :

$$T_2 > \frac{1}{-\frac{R_X}{\Delta H_X} * ln\left(\frac{P_1}{P_2}\right) + \frac{1}{T_1}}$$

où :

$R_X$ est la constante gazeuse d'un gaz noble ;
$\Delta H_X$ est l'enthalpie de solution du gaz noble dans le sel combustible ;
le gaz noble est l'un parmi le néon, l'argon, le krypton ou le xénon.

3. Réacteur à fission à sels fondus selon la revendication 1 ou 2, dans lequel la température $T_1$ du sel combustible au niveau de chaque interface gazeuse est inférieure à la température $T_2$ du sel combustible dans toutes les autres régions du tube à combustible respectif.

4. Réacteur de fission à sels fondus selon l'une quelconque des revendications précédentes, dans lequel le liquide de refroidissement est pompé de telle sorte que, pendant le fonctionnement du réacteur, il se déplace vers le bas lorsqu'il est en contact avec les tubes à combustible.

5. Réacteur de fission à sels fondus selon l'une quelconque des revendications précédentes, dans lequel :

chaque tube à combustible comprend une section supérieure qui contient l'espace de gaz respectif ;
au moins une partie de la section supérieure fait saillie dans un espace de gaz de refroidissement situé au-dessus du liquide de refroidissement pendant le fonctionnement du réacteur ;
le réacteur de fission à sels fondus comprend en outre un système de refroidissement de gaz configuré pour refroidir l'espace de gaz de refroidissement.

6. Réacteur de fission à sels fondus selon l'une quelconque des revendications précédentes, dans lequel chaque tube à combustible comprend une chicane immergée dans le sel combustible qui s'étend à travers le tube à combustible.

7. Réacteur de fission à sels fondus selon l'une quelconque des revendications 1 à 3, dans lequel le liquide de refroidissement circule à travers les tubes à combustible uniquement par convection naturelle, et le débit du liquide de refroidissement et la densité de puissance du sel combustible sont tels que la température d'une paroi du tube à combustible au niveau du fond du tube à combustible est supérieure à une température du liquide de refroidissement au niveau du sommet de la région critique.

8. Réacteur de fission à sels fondus selon l'une quelconque des revendications précédentes, dans lequel les sections supérieures de chaque tube à combustible sont criblées avec des matériaux absorbant les neutrons, de telle sorte qu'en cours d'utilisation, la production de chaleur du sel combustible au sein de la section supérieure de chaque tube à combustible est inférieure à celle dans le reste du sel combustible au sein du tube à combustible.

9. Réacteur de fission à sels fondus selon l'une quelconque des revendications précédentes, dans lequel le système de refroidissement est configuré pour diriger un flux secondaire de sel de liquide de refroidissement vers une région supérieure du tube à combustible.

10. Réacteur de fission à sels fondus selon l'une quelconque des revendications précédentes, dans lequel chaque tube à combustible comprend un élément de déplacement s'étendant depuis l'interface gazeuse jusque dans le sel combustible, l'élément de déplacement étant configuré pour déplacer un sel combustible à partir de l'axe central des tubes à combustible.

**11.** Réacteur de fission à sels fondus selon l'une quelconque des revendications précédentes, dans lequel une région au niveau du fond de chaque tube à combustible est plus isolante thermiquement que d'autres régions de chaque tube à combustible.

**12.** Réacteur de fission à sels fondus selon l'une quelconque des revendications précédentes, dans lequel le système de refroidissement est configuré de telle sorte que la région au niveau du fond de chaque tube à combustible n'est pas refroidie directement par le liquide de refroidissement.

**13.** Procédé d'exploitation d'un réacteur de fission à sels fondus, dans lequel le réacteur de fission à sels fondus comprend :
un cœur de réacteur comprenant une pluralité de tubes à combustible (101, 205, 301), chaque tube à combustible contenant :

un sel combustible (102, 302, 206), le sel combustible étant un sel fondu d'un ou plusieurs isotopes fissiles ;
une interface gazeuse du sel combustible, qui est une surface du sel combustible en contact avec un espace de gaz (106, 207, 306) pendant le fonctionnement du réacteur ;
un système de refroidissement de sel combustible configuré pour refroidir le sel combustible, le système de refroidissement de sel combustible comprenant
une cuve de liquide de refroidissement contenant un liquide de refroidissement (103, 203, 303) dans lequel les tubes à combustible sont au moins partiellement immergés, et
un échangeur de chaleur (104, 208, 304) pour extraire de la chaleur du liquide de refroidissement ;
le procédé étant **caractérisé par** le maintien des températures du sel combustible de telle sorte que pendant le fonctionnement du réacteur, pour tous les points au sein du sel combustible au sein de chaque tube à combustible excepté au niveau de l'interface gazeuse respective, on ait :

$$T_2 > \frac{1}{-\frac{R_{He}}{\Delta H_{He}} * ln\left(\frac{P_1}{P_2}\right) + \frac{1}{T_1}}$$

où :

$T_1$ est la température du sel combustible au niveau de l'interface gazeuse ;
$T_2$ est la température du sel combustible au niveau du point mesuré ;
$P_1$ est la pression absolue au niveau de l'interface gazeuse ;
$P_2$ est la pression absolue au niveau du point mesuré ;
$R_{He}$ est la constante gazeuse de l'hélium ;
$\Delta H_{He}$ est l'enthalpie de solution d'hélium dans le sel combustible.

Figure 1

Figure 2

306

303

305

301
302

304

Figure 3

Figure 4

Figure 5A

Figure 5B

Figure 6

Figure 7

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015038922 A1
- GB 2508537 A
- WO 2017192611 A1

**Non-patent literature cited in the description**

- **W. R. GRIMES** ; **N. V. SMITH** ; **G. M. WATSON**. *J. Phys. Chem.*, 1958, vol. 62, 862